# EUROPÄISCHE PATENTANMELDUNG

(11) **EP 4 640 369 A1**
(43) Veröffentlichungstag der Anmeldung: **29.10.2025**
(21) Anmeldenummer: 25171809.4
(22) Anmeldetag: 22.04.2025
(51) Int. Cl.: B24B 27/08, B24B 55/05, B25F 5/02, B23D 45/16, B26D 7/22, B27G 19/04

(54) **HANDGEFÜHRTES ARBEITSGERÄT**

(30) Priorität: 23.04.2024 DE 102024111427
(71) Anmelder: Andreas Stihl AG & Co. KG, 71336 Waiblingen (DE)
(72) Erfinder: Schindler, Patrick, 73235 Weilheim an der Teck (DE); Ehrler, Denis, 73249 Wernau (DE); Hohl, Jürgen, 71336 Waiblingen (DE); Willems, Fabian, 70374 Stuttgart (DE); Wagner, Tobias, 73663 Berglen (DE)
(74) Vertreter: Stock, Johannes

(57) **Zusammenfassung**

Die Erfindung betrifft ein handgeführtes Arbeitsgerät,
umfassend,
ein Gehäuse (2),
einen im Gehäuse (2) angeordneten Antriebsmotor (3) zum Antrieb eines um eine Drehachse (8) rotierenden Werkzeuges (5),
eine Schutzhaube (51), wobei die Schutzhaube (51) das Werkzeug (5) mindestens teilweise überdeckt,
einen gegenüber dem Gehäuse (2) feststehenden Betriebsanschlag (120) und einen mit dem Betriebsanschlag (120) korrespondierenden, an der Schutzhaube (51) angeordneten Gegenkörper (110),
wobei der Betriebsanschlag (120) als ein Energieaufnahmeelement ausgebildet ist, das bei durch den Gegenkörper (110) auf den Betriebsanschlag (120) wirkender Überlast zur Absorption von Bewegungsenergie der Schutzhaube (51) und zum Bauteilschutz des Gegenkörpers (110) dem Gegenkörper (110) ausweicht, und
wobei das Arbeitsgerät (1) einen Endanschlag (101) zur Begrenzung der Drehbewegung der Schutzhaube (51) in eine Endstellung (25) umfasst.

## Beschreibung

Die Erfindung betrifft ein handgeführtes Arbeitsgerät gemäß den Merkmalen des Oberbegriffs des Anspruchs 1.

Es ist ein handgeführtes Arbeitsgerät, insbesondere Trennschleifer, bekannt, der ein Gehäuse, einen im Gehäuse angeordneten Antriebsmotor zum Antrieb eines um eine Drehachse rotierenden Werkzeuges umfasst. Das Arbeitsgerät umfasst eine Schutzhaube, wobei die Schutzhaube das Werkzeug mindestens teilweise überdeckt. Ferner umfasst das Arbeitsgerät einen Betriebsanschlag und einen mit dem Betriebsanschlag korrespondierenden, an der Schutzhaube angeordneten Gegenkörper.

Normative Anforderung eines solchen Arbeitsgerätes ist unter anderem ein sogenannter Bersttest. Bei einem Bersttest wird ein Szenario dargestellt, in dem die Trennscheibe in Betrieb des Arbeitsgerätes in mehrere Teile bricht und dabei von der Schutzhaube aufgefangen wird. Normen sehen vor, dass die Schutzhaube die kinetische Energie der Teile der Trennscheibe aufnimmt, während die Bewegungsfreiheit der Schutzhaube jedoch begrenzt ist.

Es ist daher Aufgabe der Erfindung, ein handgeführtes Arbeitsgerät anzugeben, das die Bewegungsenergie einzelner in die Schutzhaube gelangender Trennscheibenteile zuverlässig über die Schutzhaube aufnimmt und das die Bewegungsenergie der Schutzhaube zuverlässig abbaut.

Diese Aufgabe wird durch ein gattungsgemäßes handgeführtes Arbeitsgerät gemäß den Merkmalen des Anspruchs 1 gelöst.

Das erfindungsgemäße handgeführte Arbeitsgerät, umfasst ein Gehäuse, einen im Gehäuse angeordneten Antriebsmotor zum Antrieb eines um eine Drehachse rotierenden Werkzeuges, eine Schutzhaube, wobei die Schutzhaube das Werkzeug mindestens teilweise überdeckt, einen gegenüber dem Gehäuse feststehenden Betriebsanschlag und einen mit dem Betriebsanschlag korrespondierenden, an der Schutzhaube angeordneten Gegenkörper. Der Betriebsanschlag ist als ein Energieaufnahmeelement ausgebildet, das bei durch den Gegenkörper auf den Betriebsanschlag wirkender Überlast zur Absorption von Bewegungsenergie der Schutzhaube und zum Bauteilschutz des Gegenkörpers dem Gegenkörper ausweicht. Das Arbeitsgerät umfasst einen Endanschlag zur Begrenzung der Drehbewegung der Schutzhaube in eine Endstellung.

Der Betriebsanschlag des Arbeitsgerätes dient zur Begrenzung der Schwenkbewegung der Schutzhaube. Diese kann vorzugsweise von einer ersten Betriebsposition in eine zweite Betriebsposition geschwenkt werden. Der Betriebsanschlag des Arbeitsgerätes begrenzt die Schwenkbewegung der Schutzhaube in die zweite Betriebsposition. Eine Schwenkbewegung der Schutzhaube von der ersten Betriebsposition über die zweite Betriebsposition hinaus, ist nicht vorgesehen. Im Falle eines Bersttestes kann die kinetische Energie der Schutzhaube jedoch so hoch sein, dass die Schwenkbewegung der Schutzhaube nicht mehr in Gänze von dem Betriebsanschlag gemeinsam mit dem Gegenkörper gestoppt beziehungsweise begrenzt werden kann. Daher ist der Betriebsanschlag derart ausgebildet, dass dieser über den Gegenkörper so viel kinetische Energie der Schutzhaube aufnimmt, dass die Schwenkbewegung der Schutzhaube zumindest über den Endanschlag in die Endstellung begrenzt wird. Somit wird eine zuverlässige Begrenzung der Schwenkbewegung der Schutzhaube auch im Falle des Brechens des Werkzeuges, wie im Bersttest, sichergestellt. Dadurch, dass der Betriebsanschlag dem Gegenkörper bei Überlast ausweicht, kann ferner sichergestellt werden, dass der Gegenkörper nicht beschädigt wird. Ein Ausweichen kann beispielsweise durch eine Sollbruchstelle an dem Betriebsanschlag verwirklicht sein, die bei Überlast bricht. Ein Ausweichen des Betriebsanschlages gegenüber dem Gegenkörper kann beispielsweise auch über eine Materialverformung des Betriebsanschlages umgesetzt werden, die beim Auftreffen des Gegenkörpers auf den Betriebsanschlag erfolgt. Die Materialverformung kann elastisch und/oder plastisch erfolgen. Weitere Ausbildungen des Betriebsanschlages sind denkbar, die ein Ausweichen des Betriebsanschlages gegenüber dem Gegenkörper bei einer auftretenden Überlast an dem Gegenkörper ermöglichen.

Es ist insbesondere vorgesehen, dass an der Schutzhaube ein mit dem Endanschlag korrespondierender, weiterer Gegenkörper vorgesehen ist, wobei der weitere Gegenkörper insbesondere integral an der Schutzhaube ausgebildet ist. Der Gegenkörper und der weitere Gegenkörper sind an verschiedenen Positionen der Schutzhaube angeordnet. Auch der Gegenkörper kann integral an der Schutzhaube ausgebildet sein. Eine integrale Ausbildung von Gegenkörper und/oder weiterem Gegenkörper mit der Schutzhaube ist insbesondere dann vorteilhaft, wenn die Schutzhaube als Gussbauteil ausgebildet ist. In einer alternativen Ausbildung der Schutzhaube kann es auch vorgesehen sein, dass der Gegenkörper und/oder der weitere Gegenkörper als separate Bauteile an der Schutzhaube angeordnet sind. Dies ist insbesondere dann vorgesehen, wenn die Schutzhaube aus Blechen hergestellt ist.

Es ist vorzugsweise vorgesehen, dass das Arbeitsgerät einen Ausleger mit einem proximalen Ende und einem distalen Ende aufweist, wobei der Ausleger mit seinem proximalen Ende am Gehäuse festgelegt ist und wobei an dem distalen Ende das Werkzeug anordenbar ist, wobei der Endanschlag an dem Ausleger insbesondere integral ausgebildet ist. Der Ausleger ist bevorzugt als Gussbauteil, insbesondere aus Metallguss, ausgebildet. In einer solchen Ausführung ist es kostengünstig, den Endanschlag bereits am Gussbauteil vorzusehen. Ferner kann integrale Ausbildung des Endanschlags mit dem Ausleger die Festigkeit des Endanschlages begünstigen.

Es ist vorteilhaft vorgesehen, dass die Schutzhaube eine erste Außenseite, eine zweite Außenseite und eine Umfangsseite umfasst, wobei die erste Außenseite und die zweite Außenseite über die Umfangsseite miteinander verbunden sind, wobei der mit dem Betriebsanschlag korrespondierende Gegenkörper an der Umfangsseite angeordnet ist. Die Umfangsseite weist den maximalen Abstand zur Drehachse des Werkzeuges und damit auch zur Schwenkachse der Schutzhaube auf. Die Drehachse des Werkzeuges entspricht der Schwenkachse der Schutzhaube. Der Gegenkörper bildet somit einen Lastangriffspunkt für den Betriebsanschlag, der im Hinblick auf den maximalen Abstand zur Schwenkachse eine hohe Hebelwirkung aufweist.

Ferner ist der mit dem Endanschlag korrespondierende weitere Gegenkörper an der ersten Außenseite oder an der zweiten Außenseite der Schutzhaube festgelegt. Der Gegenkörper und der weitere Gegenkörper sind somit beabstandet zueinander angeordnet. Die Schutzhaube weist bezogen auf die Drehachse einen Radius auf, wobei der Abstand des Endanschlages zur Drehachse höchstens 60% des Radius beträgt. Analog beträgt auch der Abstand des weiteren Gegenkörpers zur Drehachse insbesondere höchstens 60% des Radius der Schutzhaube. Je näher der Endanschlag und/oder der weitere Gegenkörper zur Drehachse des Werkzeuges beziehungsweise zur Schwenkachse der Schutzhaube angeordnet sind, desto geringer ist die Hebelwirkung bezüglich des Lastangriffspunktes an der Schutzhaube. Allerdings reduziert sich damit auch die Aufprallgeschwindigkeit des weiteren Gegenkörpers auf den Endanschlag. Treffen also der weitere Gegenkörper und der Endanschlag mit reduzierter Geschwindigkeit aufeinander, so erfolgt auch die elastische und/oder plastische Verformung unter einer geringeren Dehnrate. Je geringer die Dehnrate bei einem Verformungsvorgang ist, desto geringer ist auch die Spannung, die im Bereich der Verformung des Bauteils auftritt. Somit soll ein Bauteilversagen von dem Endanschlag und dem weiteren Gegenkörper vermieden werden. Besonders bevorzugt beträgt der Abstand des Endanschlages und/oder des weiteren Gegenkörpers höchstens 50%, ganz insbesondere höchstens 40% des Radius der Schutzhaube.

Es ist bevorzugt vorgesehen, dass der Endanschlag und der weitere Gegenkörper derart ausgebildet sind, dass diese bei gegenseitigem Kontakt eine Kontaktfläche aufweisen, die sich radial zur Drehachse über mindestens 10% des Radius der Schutzhaube erstreckt. Somit soll eine ausreichend große Kontaktfläche sichergestellt werden, die wiederum eine möglichst geringe Flächenpressung bewirkt. Die geringe Flächenpressung führt wiederum zu Verformungen mit geringeren Dehnungen und damit auch mit geringeren Spannungen.

Es ist insbesondere vorgesehen, dass das Arbeitsgerät eine Motortrageinheit aufweist, an der der Antriebsmotor und das Gehäuse des Arbeitsgerätes befestigt sind, wobei der Betriebsanschlag an der Motortrageinheit angeordnet ist. Die Motortrageinheit des erfindungsgemäßen handgeführten Arbeitsgerätes ist ein Bauteil von besonders hoher Festigkeit sowie von hoher Steifigkeit. Dadurch wird eine möglichst exakte Positionierung des Antriebsmotors, insbesondere dessen einzelner Komponenten, im Gehäuse gewährleistet, wodurch die Antriebsfunktion des Antriebsmotors sichergestellt wird. Durch die Ausbildung des Betriebsanschlages an der Motortrageinheit kann sichergestellt werden, dass hohe Kräfte und Momente von der Schutzhaube ausgehend über den Gegenkörper und den Betriebsanschlag auf die Motortrageinheit übertragbar sind. Durch die Ausbildung des Betriebsanschlages an der Motortrageinheit kann die kinetische Energie der in der Schutzhaube aufgenommenen Teile des Werkzeuges, insbesondere der Trennscheibe, auf die Motortrageinheit übertragen werden.

Es ist insbesondere vorgesehen, dass der Betriebsanschlag, der Endanschlag, der Gegenkörper und/oder der weitere Gegenkörper aus einer Metalllegierung gebildet sind. Somit weisen die genannten Bauteile insbesondere gegenüber Ausführungen aus Kunststoff eine hohe Festigkeit auf. Somit kann die Schwenkbewegung der Schutzhaube zuverlässig gestoppt beziehungsweise begrenzt werden.

Es ist insbesondere vorgesehen, dass das Arbeitsgerät eine an dem Betriebsanschlag ausgebildete erste Anschlagsfläche und eine an dem Gegenkörper ausgebildete zweite Anschlagsfläche aufweist, die sich bei Kontakt von Betriebsanschlag und Gegenkörper in einer gemeinsamen Kontaktfläche berühren. Die erste Anschlagsfläche und die zweite Anschlagsfläche sind derart ausgebildet, dass sich diese bei gegenseitigem Kontakt flächig kontaktieren. So kann die an den Anschlagsflächen auftretende Flächenpressung möglichst gering gehalten werden, um Beschädigungen an den Bauteilen zu vermeiden. Es ist insbesondere vorgesehen, dass die Kontaktfläche eine Kontaktebene aufspannt, und dass die Kontaktebene das Werkzeug an einem Werkzeugumfang des Werkzeuges in einer Kontaktlinie schneidet und mit einer Tangentialebene des Werkzeuges, die das Werkzeug an der Kontaktlinie berührt, einen Winkel einschließt. Dieser Winkel ist in Drehrichtung des Werkzeuges geöffnet. Der Winkel ist insbesondere kleiner als 90°, insbesondere kleiner als 80°. Dadurch greifen der Betriebsanschlag und der Gegenkörper ineinander. In anderen Worten erfolgt eine Art Verhakung des Betriebsanschlages und des Gegenkörpers. Somit kann sichergestellt werden, dass der Gegenkörper an der Schutzhaube nicht von dem Betriebsanschlag an der Motortrageinheit abgleitet. Der genannte Winkel ist insbesondere größer als 55°, vorzugsweise größer als 65°, insbesondere größer als 70°. Somit wird sichergestellt, dass ein auftretender Keileffekt, also die Kraftkomponenten, die lotrecht zur Flächennormale der Kontaktfläche ausgerichtet sind, nicht zu groß werden und den Betriebsanschlag beziehungsweise den Gegenkörper nicht beschädigen. Darüber hinaus können auch Kerbwirkungen auftreten, die durch einen zu spitzen Winkel begünstigt werden. Besonders vorteilhaft ist die Kontaktfläche parallel zu einer Ebene ausgebildet, die durch die Längsmittelachse des Auslegers und durch eine Drehachse des Werkzeuges aufgespannt ist.

Nachfolgend ist ein Ausführungsbeispiel anhand der Zeichnung erläutert. Es zeigen:
- Fig. 1: in einer perspektivischen Darstellung eine erfindungsgemäße Ausführung des handgeführten Arbeitsgerätes,
- Fig. 2: in einer Seitenansicht das handgeführte Arbeitsgerät nach Fig. 1,
- Fig. 3: in einer Seitenansicht das handgeführte Arbeitsgerät nach Fig. 1 werkzeuglos und teilweise ohne Abdeckung des Auslegers,
- Fig. 4: in einer ausschnittsweisen Seitendarstellung den Ausleger des Arbeitsgerätes nach Fig. 1 mit Riemenscheibe und Riemen
- Fig. 5: in einer Seitendarstellung das Arbeitsgerät 1 nach Fig. 1 in der zweiten Betriebsstellung,
- Fig. 6: in einer Seitendarstellung das Arbeitsgerät 1 nach Fig. 1 schematisch in der ersten Betriebsstellung und in der zweiten Betriebsstellung,
- Fig. 7: in einer perspektivischen Darstellung die Schutzhaube des Arbeitsgerätes nach Fig. 1,
- Fig. 8: in einer perspektivischen Darstellung die Motortrageinheit des Arbeitsgerätes nach Fig. 1,
- Fig. 9: in einer Darstellung von unten das Arbeitsgerät nach Fig. 1,
- Fig. 10: in einer seitlichen, vergrößerten Darstellung Betriebsanschlag und Gegenkörper des Arbeitsgerätes nach Fig. 1 in Kontakt,
- Fig. 11: in einer perspektivischen Darstellung der Ausleger des Arbeitsgerätes nach Fig. 1,
- Fig. 12: in einer Seitendarstellung der Ausleger nach Fig. 11,
- Fig. 13: in einer Seitendarstellung die Schutzhaube nach Fig. 7,
- Fig. 14: in einer Seitendarstellung das Arbeitsgerät nach Fig. 1 mit transparent dargestellter Schutzhaube in Endstellung,
- Fig. 15: in einer perspektivischen Darstellung eine alternative Ausführung der Motortrageinheit mit Betriebsanschlag,
- Fig. 16: in einer Vorderansicht die Motortrageinheit nach Fig. 15,
- Fig. 17: in einer ausschnittsweisen Schnittdarstellung entlang der Schnittlinie zwischen den Pfeilen XVII die Motortrageinheit nach Fig. 15,
- Fig. 18: in einer perspektivischen Darstellung eine weitere alternative Ausführung der Motortrageinheit mit Betriebsanschlag,
- Fig. 19: in einer Vorderansicht die Motortrageinheit nach Fig. 18 und
- Fig. 20: in einer ausschnittsweisen Schnittdarstellung entlang der Schnittlinie zwischen den Pfeilen XX die Motortrageinheit nach Fig. 18.

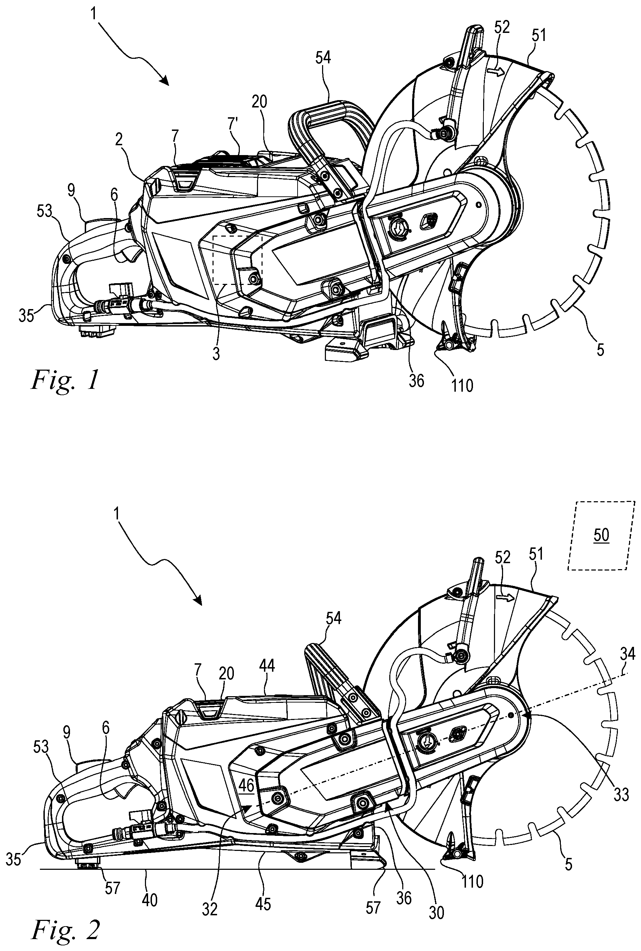

Fig. 1 zeigt ein Ausführungsbeispiel des handgeführten Arbeitsgerätes 1 als Trennschleifer. Das Arbeitsgerät 1 kann alternativ auch als Motorsäge oder als anderes Arbeitsgerät ausgebildet sein. Das Arbeitsgerät 1 ist handgeführt, insbesondere handgetragen. Das vorliegende Arbeitsgerät 1 wird im Betrieb vom Bediener getragen und geführt. Das Arbeitsgerät 1 weist ein Gehäuse 2 auf. Ferner umfasst das Arbeitsgerät 1 einen Antriebsmotor 3, wobei der Antriebsmotor 3 im Gehäuse 2 angeordnet ist. In Fig. 1 ist der Antriebsmotor 3 lediglich schematisch durch ein gestricheltes Viereck dargestellt. Im vorliegenden Ausführungsbeispiel ist der Antriebsmotor 3 als Elektromotor ausgebildet. In einer alternativen Ausführung kann der Antriebsmotor 3 auch als Verbrennungsmotor ausgebildet sein. Der Antriebsmotor 3 dient zum Antrieb eines an dem Arbeitsgerät 1 anordenbaren Werkzeuges 5. Das Werkzeug 5 ist in dem vorliegenden Ausführungsbeispiel als Trennscheibe ausgebildet.

Wie in Fig. 1 gezeigt, umfasst das Arbeitsgerät 1 mindestens einen Akkupack 7 zur elektrischen Energieversorgung des Antriebsmotors 3. Besonders bevorzugt umfasst das Arbeitsgerät 1 einen weiteren Akkupack 7' zur Energieversorgung des Antriebsmotors 3. Zur Aufnahme des mindestens einen Akkupacks 7 und/oder des weiteren Akkupacks 7' ist ein Aufnahmegehäuse 20 vorgesehen. Das Aufnahmegehäuse 20 ist an dem Gehäuse 2 angeordnet, insbesondere fixiert. In der vorliegenden Ausführung des Arbeitsgerätes 1 ist das Aufnahmegehäuse 20 als ein gegenüber dem Gehäuse 2 separates Bauteil ausgebildet. In einer alternativen Ausführung kann es auch vorgesehen sein, dass das Aufnahmegehäuse 20 und das Gehäuse 2 einteilig ausgebildet sind, insbesondere das Aufnahmegehäuse 20 integraler Bestandteil des Gehäuses 2 ist. Das Aufnahmegehäuse 20 umfasst eine erste Aufnahme zur Aufnahme des mindestens einen Akkupacks 7. Ferner umfasst das Aufnahmegehäuse 20 eine zweite Aufnahme zur Aufnahme des weiteren Akkupacks 7'. Die Akkupacks 7, 7' sind werkzeuglos dem Aufnahmegehäuse 20, insbesondere den Aufnahmen entnehmbar. Die Akkupacks 7, 7' werden zu deren Befestigung am Arbeitsgerät 1 in das Aufnahmegehäuse 20, insbesondere in die Aufnahmen eingesteckt und verrastet. Die Verrastung kann werkzeuglos gelöst werden und die Akkupacks 7, 7' wieder aus dem Aufnahmegehäuse 20, insbesondere den Aufnahmen, beispielsweise zum Aufladen oder einfach zu deren Wechsel, entnommen werden. Die Akkupacks 7, 7' können alternativ als Schlittenakkupacks ausgebildet.

Wie in den Fig. 1 und 2 gezeigt, umfasst das Arbeitsgerät 1 einen hinteren Handgriff 53. Ferner umfasst das Arbeitsgerät 1 einen vorderen Handgriff 54. Der vordere Handgriff 54 ist bevorzugt als Griffrohr ausgebildet. Auch andere Ausgestaltungen des vorderen Handgriffes 54 können zweckmäßig sein. Das Gehäuse 2 erstreckt sich von einem hinteren Ende 35 bis zu einem vorderen Ende 36. Der hintere Handgriff 53 bildet vorliegend das hintere Ende 35 des Gehäuses 2. In einer alternativen Ausführung kann es auch vorgesehen sein, dass der hintere Handgriff 53 separat gegenüber dem Gehäuse 2 ausgebildet ist. In einer solchen Ausführung ist der hintere Handgriff 53 im Bereich des hinteren Endes 35 des Gehäuses 2 angeordnet. Der vordere Handgriff 54 ist im Bereich des vorderen Endes 36 des Gehäuses 2 angeordnet.

Zudem weist das Arbeitsgerät 1 ein Bedienelement 6 auf, wobei das Bedienelement 6 zur Ansteuerung des Antriebsmotors 3 vorgesehen ist. Das Bedienelement 6 ist als Bedienhebel ausgebildet. Das Bedienelement 6 ist dem hinteren Handgriff 53 zugeordnet. Ferner umfasst das Arbeitsgerät 1 ein Sperrelement 9, welches in einer Sperrstellung das Bedienelement 6 sperrt und in einer Freigabestellung das Bedienelement 6 zur Betätigung freigibt. Das Sperrelement 9 ist vorzugsweise als Sperrhebel ausgebildet. Die Sperr- sowie die Freigabefunktion durch das Sperrelement 9 können mechanisch und/oder elektronisch, beispielsweise durch Sensoren, erfolgen. Das Sperrelement 9 ist dem hinteren Handgriff 53 zugeordnet. Das bedeutet, dass der Bediener beim Greifen des hinteren Handgriffs 53 das Bedienelement 6 sowie das Sperrelement 9 betätigen kann. Im bevorzugten Ausführungsbeispiel sind das Bedienelement 6 und das Sperrelement 9 am hinteren Handgriff 53 angeordnet.

Besonders bevorzugt umfasst das Arbeitsgerät 1 eine nicht näher dargestellte Steuereinheit. Die Steuereinheit verarbeitet Signale, die durch das Bedienelement 6 und/oder das Sperrelement 9 erzeugt werden und dient im Wesentlichen zur Steuerung des Antriebsmotors 3. Auch andere Funktionen des Arbeitsgerätes 1 können über die Steuereinheit umgesetzt werden.

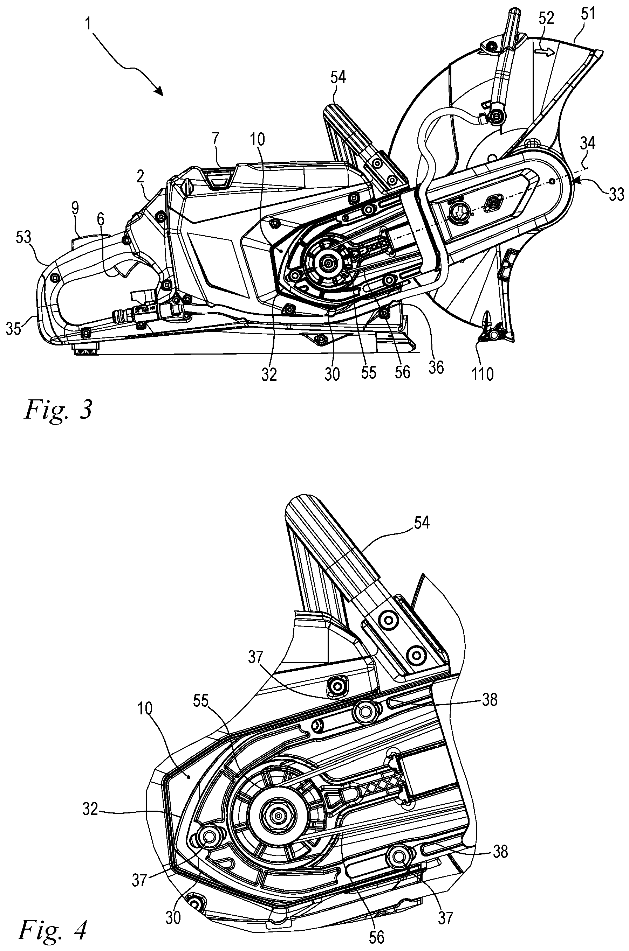

Wie in Fig. 3 gezeigt, umfasst das Arbeitsgerät 1 einen Ausleger 30. Der Ausleger 30 erstreckt sich entlang seiner Längsmittelachse 34 von einem proximalen Ende 32 bis zu einem distalen Ende 33. Der Ausleger 30 ist zumindest mittelbar an dem Gehäuse 2 festgelegt. Der Ausleger 30 ist insbesondere im Bereich des vorderen Endes 36 des Gehäuses 2 mittelbar am Gehäuse 2 festgelegt. Der Ausleger 30 ragt über das vordere Ende 36 des Gehäuses 2 hinaus und erstreckt sich mit seinem distalen Ende 33 von dem vorderen Ende 36 des Gehäuses 2 weg. An dem distalen Ende 33 des Auslegers 30 ist das Werkzeug 5 anordenbar. Das Werkzeug 5 ist an dem distalen Ende 33 des Auslegers 30 drehbar gelagert. Im Betrieb des Arbeitsgerätes 1 ist das Werkzeug 5 vom Antriebsmotor 3 in einer Drehrichtung 52 rotierend angetrieben (Fig. 1 und 2).

Wie in den Figuren 3 und 4 gezeigt, umfasst das Arbeitsgerät 1 eine Riemenscheibe 55, die über den Antriebsmotor 3 angetrieben ist. Ferner umfasst das Arbeitsgerät 1 eine nicht näher dargestellte weitere Riemenscheibe, die an dem distalen Ende 33 des Auslegers 30 angeordnet ist und mit dem Werkzeug 5 in Drehrichtung 52 des Werkzeuges 5 fest verbunden ist. Das Werkzeug 5 sowie die weitere Riemenscheibe sind selbstverständlich demontierbar, wodurch diese jeweils einzeln ausgetauscht werden können. Die Riemenscheibe 55, die vorzugsweise im Bereich des proximalen Endes 32 des Auslegers 30 am Gehäuse 2 angeordnet ist, ist mit der weiteren Riemenscheibe über einen Riemen 56 wirkverbunden. Der Riemen 56 dient zur Drehzahl- und Drehmomentübertragung zwischen dem Antriebsmotor 3 und dem Werkzeug 5.

Wie in den Fig. 1 und 2 gezeigt, umfasst das Arbeitsgerät 1 eine Schutzhaube 51. Die Schutzhaube 51 ist an dem Ausleger 30, insbesondere an dem distalen Ende 33 des Auslegers 30, befestigt. Die Schutzhaube 51 deckt das Werkzeug 5 über einen Teil seines Umfangs ab.

Wie in Fig. 2 gezeigt, umfasst das Arbeitsgerät 1 eine Oberseite 44 und eine Unterseite 45, wobei das Arbeitsgerät 1 auf der Unterseite 45 auf einen Boden 40 abstellbar ist. Die Oberseite 44 und die Unterseite 45 sind durch eine erste Längsaußenseite 46 und eine zweite Längsaußenseite 47 miteinander verbunden. Ausdrücke, die Seiten oder andere Bauteile des Arbeitsgerätes 1 mittels Raumangaben beschreiben, beispielsweise "Oberseite" und "Unterseite", beziehen sich dabei grundsätzlich auf die in Fig. 2 gezeigte übliche Abstellposition des Arbeitsgerätes 1. Die übliche Abstellposition des Arbeitsgerätes 1 ist eine Position, in der das Arbeitsgerät 1 auf einer ebenen, horizontalen Abstellfläche abgestellt ist. Zum Abstellen des Arbeitsgerätes 1 dienen Standfüße 57.

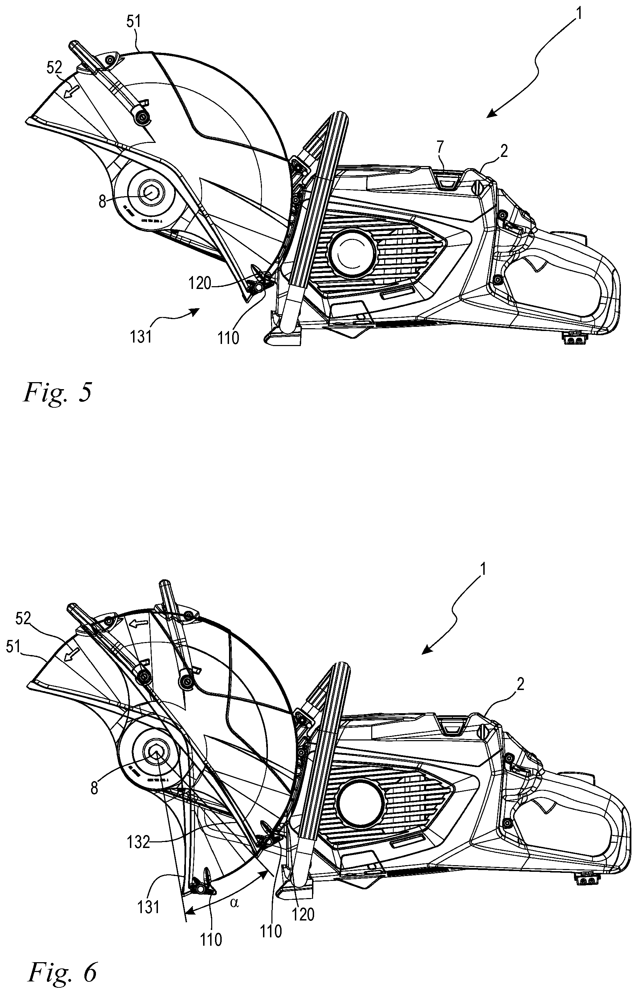

Wie in den Figuren 5 und 6 gezeigt, umfasst das Arbeitsgerät 1 einen Betriebsanschlag 120. Der Betriebsanschlag 120 ist feststehend zum Gehäuse 2 ausgebildet. An der Schutzhaube 51 ist ein mit dem Betriebsanschlag 120 korrespondierender Gegenkörper 110 angeordnet. Der Betriebsanschlag 120 und der Gegenkörper 110 sind zur mechanischen Wechselwirkung ausgebildet, um eine Schwenkbewegung der Schutzhaube 51 von einer ersten Betriebsstellung 131 in eine zweite Betriebsstellung 132 zu begrenzen. Das Werkzeug 5 ist um eine Drehachse 8 drehbar gelagert. Die Schutzhaube 51 ist schwenkbar um eine Drehachse gelagert. Die Drehachse der Schutzhaube 51 entspricht der Drehachse 8 des Werkzeuges 5. Wie in Fig. 6 gezeigt, ist die Schutzhaube 51 von der ersten Betriebsstellung 131 in die zweite Betriebsstellung 132 schwenkbar. Fig. 6 zeigt schematisch die Schutzhaube 51 sowohl in der ersten Betriebsstellung 131 als auch in der zweiten Betriebsstellung 132, um einen maximalen Schwenkwinkel α der Schutzhaube 51 im bestimmungsgemäßen Betrieb des Arbeitsgerätes 1 darzustellen. In der ersten Betriebsstellung 131 sind der Betriebsanschlag 120 und der Gegenkörper 110 beabstandet zueinander angeordnet. Der Betriebsanschlag 120 und der Gegenkörper 110 kontaktieren sich nicht. In der zweiten Betriebsstellung 132 kontaktieren sich der Betriebsanschlag 120 und der Gegenkörper 110, wie auch in Fig. 5 gezeigt.

Wie in Fig. 6 gezeigt, ist die Schutzhaube 51 um den maximalen Schwenkwinkel α schwenkbar. Der maximale Schwenkwinkel α ist der Winkel, um welchen die Schutzhaube 51 im bestimmungsgemäßen Betrieb des Arbeitsgerätes 1 geschwenkt werden kann. Der maximale Schwenkwinkel α erstreckt sich bezogen auf die Drehachse 8 von der ersten Betriebsstellung 131 in die zweite Betriebsstellung 132. Ein Schwenken der Schutzhaube 51 in Drehrichtung 52 des Werkzeuges 5 über die zweite Betriebsstellung 132 hinaus ist im bestimmungsgemäßen Betrieb des Arbeitsgerätes 1 nicht vorgesehen. Ein Schwenken der Schutzhaube 51 entgegen der Drehrichtung 52 des Werkzeuges 5 über die erste Betriebsstellung 131 hinaus ist ebenfalls nicht vorgesehen, da in dieser Richtung ein nicht näher dargestellter, weiterer Betriebsanschlag vorgesehen ist. Der maximale Schwenkwinkel α ist bevorzugt kleiner gleich 90°, insbesondere kleiner 60°. Der maximale Schwenkwinkel α der Schutzhaube 51 von der ersten Betriebsstellung 131 in die zweite Betriebsstellung 132 oder von der zweiten Betriebsstellung 132 in die erste Betriebsstellung 131 beträgt vorzugsweise mindestens 30°. Die Schutzhaube 51 kann auch in nicht näher dargestellte Zwischenstellungen geschwenkt werden, wobei die Zwischenstellungen zwischen der ersten Betriebsstellung 131 und der zweiten Betriebsstellung 132 liegen. Die Schutzhaube 51 kann vorzugsweise in eine entsprechende Zwischenstellung zwischen der ersten Betriebsstellung 131 und der zweiten Betriebsstellung 132 stufenlos geschwenkt werden. Die Schutzhaube 51 ist in der entsprechenden Zwischenstellung vorzugsweise fixiert.

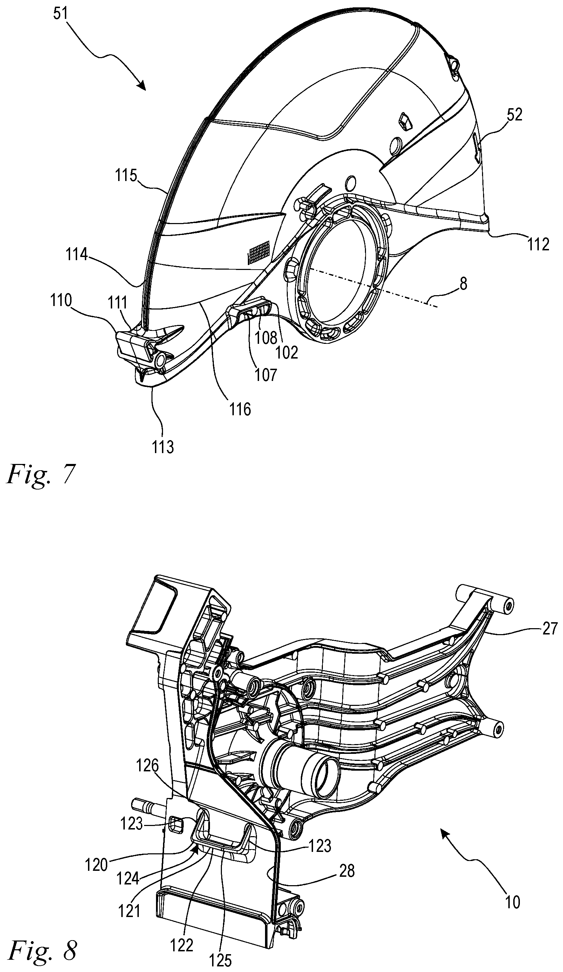

In Fig. 7 ist die Schutzhaube 51 für sich genommen dargestellt. Die Schutzhaube 51 erstreckt sich von einem ersten Ende 112 um die Drehachse 8 bis zu einem zweiten Ende 113. Das zweite Ende 113 ist das Ende der Schutzhaube 51, das sowohl in der ersten Betriebsstellung 131 als auch in der zweiten Betriebsstellung 132 der Schutzhaube 51 näher am Gehäuse 2 angeordnet ist (Fig. 6). Darüber hinaus liegt das zweite Ende 113 unterhalb des ersten Endes 112 der Schutzhaube 51. Der Gegenkörper 110 ist vorzugsweise benachbart zum Ende 113 der Schutzhaube 51 angeordnet. Die Schutzhaube 51 weist eine erste Außenseite 115, eine zweite Außenseite 116 sowie eine Umfangsseite 114 auf. Die erste Außenseite 115 und die zweite Außenseite 116 sind über die Umfangsseite 114 miteinander verbunden. Die Haupterstreckungsrichtung der ersten Außenseite 115 und der zweiten Außenseite 116 der Schutzhaube 51 verläuft in etwa parallel zur Werkzeugebene 50 (Fig. 2). Der Gegenkörper 110 ist auf der Umfangsseite 114 der Schutzhaube 51 angeordnet. Der Gegenkörper 110 ist vorzugsweise integral mit der Schutzhaube 51 ausgebildet. Die Schutzhaube 51 ist vorzugsweise ein Gussbauteil. Die Schutzhaube 51 und der Gegenkörper 110 sind vorzugsweise aus einem einzigen Gussbauteil gebildet. Die Schutzhaube 51 sowie der Gegenkörper 110 sind insbesondere aus einer Metalllegierung gebildet. Somit weist die Schutzhaube 51 gemeinsam mit dem Gegenkörper 110 eine hohe Bauteilfestigkeit auf. In einer alternativen Ausführung kann es auch vorgesehen sein, dass die Schutzhaube 51 aus Blechelementen geschweißt, geschraubt, genietet oder beispielsweise geclipst ist.

In Fig. 8 ist die Motortrageinheit 10 für sich genommen gezeigt. Die Motortrageinheit 10 ist Bestandteil des Arbeitsgerätes 1. Die Motortrageinheit 10 ist gegenüber dem Gehäuse 2 separat ausgebildet. Der Antriebsmotor 3 ist an der Motortrageinheit 10 vorzugsweise unmittelbar befestigt. Das Gehäuse 2 ist ebenfalls an der Motortrageinheit 10 befestigt.

Wie in Fig. 8 gezeigt, ist die Motortrageinheit 10 als eine Motortragplatte ausgebildet. Die Motortrageinheit 10 erstreckt sich von einem hinteren Ende 27 bis zu einem vorderen Ende 28. An dem hinteren Ende 27 der Motortrageinheit 10 ist der hintere Handgriff 53 angeordnet, insbesondere befestigt. An dem vorderen Ende 28 ist der vordere Handgriff 54 angeordnet, insbesondere befestigt. Die Motortrageinheit 10 ist bevorzugt ein Gussteil. Die Motortrageinheit 10 ist vorzugsweise aus einer Metalllegierung, insbesondere aus einer Magnesiumlegierung, gebildet.

Wie insbesondere in Fig. 8 gezeigt, ist der Betriebsanschlag 120 an der Motortrageinheit 10, insbesondere an dem vorderen Ende 28 der Motortrageinheit 10 angeordnet. Besonders bevorzugt ist der Betriebsanschlag 120 integral mit der Motortrageinheit 10 ausgebildet. Wie bereits oben ausgeführt, ist die Motortrageinheit 10 in der bevorzugten Ausführungsform als Gussbauteil ausgebildet. Demnach bilden die Motortrageinheit 10 sowie der Betriebsanschlag 120 ein einziges Gussbauteil.

Wie in den Figuren 7 bis 10 gezeigt, umfasst das Arbeitsgerät 1 eine erste Anschlagsfläche 111 und eine zweite Anschlagsfläche 122. Die erste Anschlagsfläche 111 ist an dem Gegenkörper 110 der Schutzhaube 51 ausgebildet. Die zweite Anschlagsfläche 122 ist an dem Betriebsanschlag 120 der Motortrageinheit 10 ausgebildet. In der zweiten Betriebsstellung 132 der Schutzhaube 51 liegt der Gegenkörper 110 mit der ersten Anschlagsfläche 111 an der zweiten Anschlagsfläche 122 des Betriebsanschlages 120 an. In der zweiten Betriebsstellung 132 der Schutzhaube 51 kontaktieren sich die erste Anschlagsfläche 111 und die zweite Anschlagsfläche 122 in einer Kontaktfläche 130. Die erste Anschlagsfläche 111 und die zweite Anschlagsfläche 122 sind folglich derart ausgebildet, dass sich diese flächig in der zweiten Betriebsstellung 132 der Schutzhaube 51 kontaktieren.

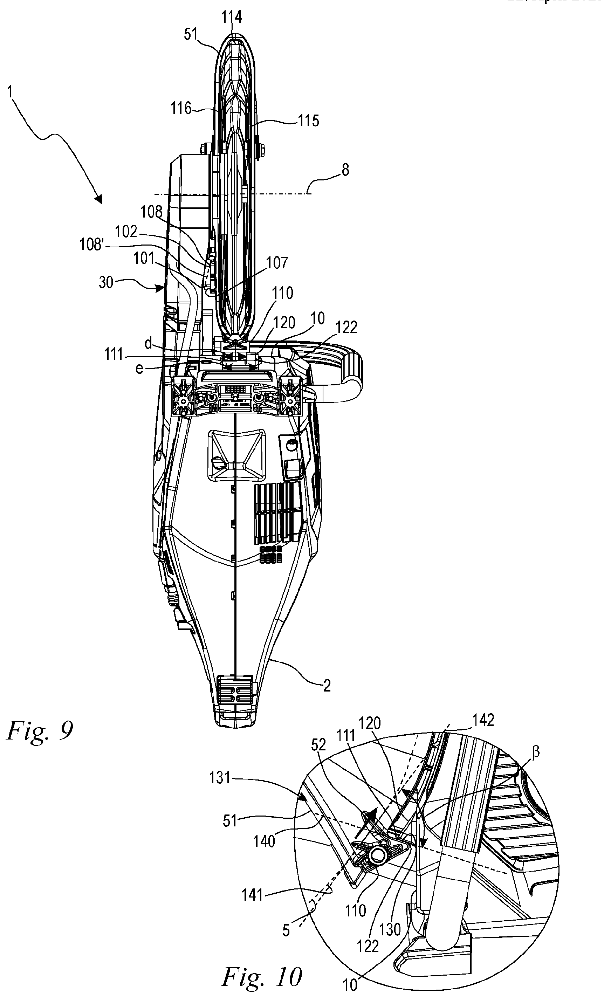

In Fig. 10 sind der Gegenkörper 110 und der Betriebsanschlag 120 im gegenseitigen Kontakt vergrößert dargestellt. Die Kontaktfläche 130 spannt eine Kontaktebene 140 auf. Das Werkzeug 5 ist in Fig. 10 gestrichelt dargestellt und weist einen Werkzeugumfang 141 auf. Da ein derartiges Werkzeug 5 beispielsweise als Trennscheibe ausgebildet keinen ideal kreisrunden Werkzeugumfang aufweist, soll dieser vielmehr als eine bezogen auf die Drehachse 8 des Werkzeuges 5 radial äußerste Kontur eines durch das Werkzeug 5 vorgegebenen Drehkörpers verstanden werden. Die Kontaktebene 140 schneidet das Werkzeug 5 an dem Werkzeugumfang 141 des Werkzeuges 5 in einer nicht näher dargestellten Kontaktlinie. An dieser Kontaktlinie weist das Werkzeug 5 eine Tangentialebene 142 auf. In anderen Worten weist das Werkzeug 5 eine Tangentialebene 142 auf, die das Werkzeug 5 an dem Werkzeugumfang 141 in der genannten Kontaktlinie tangiert. Kontaktebene 140 und Tangentialebene 142 schneiden sich in der Kontaktlinie und schließen dabei einen Winkel β ein. Der Winkel β ist bezogen auf die Kontaktlinie in Drehrichtung 52 des Werkzeuges 5 geöffnet. Der Winkel β ist vorzugsweise kleiner gleich 90°, insbesondere kleiner als 80°. Der Winkel β ist insbesondere größer als 55°, insbesondere größer als 65°, besonders bevorzugt größer als 70°. Der Winkel β ist derart gewählt, dass sich der Gegenkörper 110 und der Betriebsanschlag 120 ineinander verhaken. Die Schutzhaube 51 wird durch die oben beschriebene winklige Ausrichtung der Kontaktzone bei Kontakt von Gegenkörper 110 und Betriebsanschlag 120 an die Motortrageinheit 10 herangezogen. Dennoch ist der Winkel β nicht derart spitz ausgebildet, dass die Reaktionskräfte von Gegenkörper 110 und Betriebsanschlag 120 nur so hoch sind, dass ein Ausbrechen der Gegenkörper 110 aus der Schutzhaube 51 vermieden wird.

Wie in Fig. 10 gezeigt, ist die erste Anschlagsfläche 111 an dem Gegenkörper 110 der Schutzhaube 51 in Drehrichtung 52 des Werkzeuges 5 ausgerichtet. Die zweite Anschlagsfläche 122 an dem Betriebsanschlag 120 der Motortrageinheit 10 ist entgegen der Drehrichtung 52 des Werkzeuges 5 ausgerichtet.

Wie in Fig. 9 gezeigt, weist die erste Anschlagsfläche 111 des Gegenkörpers 110 eine in Richtung der Drehachse 8 des Werkzeuges 5 gemessene Breite d auf. Die zweite Anschlagsfläche 122 des Betriebsanschlages 120 weist eine in Richtung der Drehachse 8 des Werkzeuges 5 gemessene Breite e auf. Die Breite e der zweiten Anschlagsfläche 122 des Betriebsanschlages 120 ist größer als die Breite d der ersten Anschlagsfläche 111 des Gegenkörpers 110. Die Breite e der zweiten Anschlagsfläche 122 des Betriebsanschlages 120 entspricht mindestens dem 1,2-fachen, vorzugsweise mindestens dem 1,3-fachen, insbesondere mindestens dem 1,4-fachen der Breite d der ersten Anschlagsfläche 111 des Gegenkörpers 110 der Schutzhaube 51. Besonders bevorzugt entspricht die Breite e der zweiten Anschlagsfläche 122 des Betriebsanschlages 120 in etwa dem 1,5-fachen der Breite d der ersten Anschlagsfläche 111 des Gegenkörpers 110 der Schutzhaube 51. Die Breite d der ersten Anschlagsfläche 111 des Gegenkörpers 110 ist geringer als die Breite des Grundkörpers der Schutzhaube 51, die durch den in Richtung der Drehachse 8 des Werkzeuges 5 gemessenen maximalen Abstand zwischen der ersten Außenseite 115 und der zweiten Außenseite 116 der Schutzhaube 51 vorgegeben ist.

Wie in Fig. 9 gezeigt, sind die erste Anschlagsfläche 111 des Gegenkörpers 110 und die zweite Anschlagsfläche 122 des Betriebsanschlages 120 derart zueinander angeordnet, dass deren dem Ausleger 30 zugewandtes Ende in etwa bezogen auf eine Richtung der Drehachse 8 des Werkzeuges 5 in etwa auf gleicher Position angeordnet sind. Da die zweite Anschlagsfläche 122 breiter als die erste Anschlagsfläche 111 ist, weist das dem Ausleger 30 abgewandte Ende der zweiten Anschlagsfläche 122 einen deutlich größeren Abstand zum Ausleger 30 auf als das dem Ausleger 30 abgewandte Ende der ersten Anschlagsfläche 111. Somit wird sichergestellt, dass auch bei Verformungen der Schutzhaube 51, beispielsweise durch Schwingungen der Schutzhaube 51, der Gegenkörper 110 mit seiner gesamten ersten Anschlagsfläche 111 auf der zweiten Anschlagsfläche 122 des Betriebsanschlages 120 zum Liegen kommt. Üblicherweise verformt sich die Schutzhaube 51 von dem Ausleger 30 weg, da dieser einen einseitigen Anschlag für die Schutzhaube 51 bildet.

Wie in Fig. 8 gezeigt, ist der Betriebsanschlag 120 aus einer Anschlagswand 124 und zwei äußeren Rippen 123 gebildet. Die Anschlagswand 124 bildet gegenüber dem Grundkörper der Motortrageinheit 10 einen Vorsprung. Die Anschlagswand 124 ist an ihren beiden Enden jeweils durch eine äußere Rippe 123 gegen den Grundkörper des Betriebsanschlages 120 abgestützt. Die Anschlagswand 123 weist eine Unterseite 125 und eine der Unterseite 125 gegenüberliegende Oberseite 126 auf. An der Unterseite 125 der Anschlagswand 123 ist die zweite Anschlagsfläche 122 des Betriebsanschlages 120 ausgebildet. Zwischen den äußeren beiden Rippen 123 ist die Oberseite 126 der Anschlagswand 124 frei von weiteren Versteifungsstrukturen. Somit bildet die Anschlagswand 124 aufgrund fehlender weiterer Versteifungsstrukturen eine potenzielle Sollbruchstelle 121. Der Betriebsanschlag 120 ist derart ausgebildet, dass dieser zuverlässig die Schwenkbewegung der Schutzhaube 51, durch den Bediener von Hand ausgeführt, begrenzt. Hierfür weisen sowohl der Gegenkörper 110 als auch der Betriebsanschlag 120 eine ausreichend hohe Bauteilfestigkeit auf. Sollte die Schutzhaube 51 jedoch mit deutlich höherer Bewegungsenergie mit ihrem Gegenköper 110 gegen den Betriebsanschlag 120 stoßen, beispielsweise bei einem Bersttest, so soll durch die Ausbildung der Sollbruchstelle 121 an dem Betriebsanschlag 120 sichergestellt werden, dass zum Schutz des Gegenkörpers 110 an der Schutzhaube 51 der Betriebsanschlag 120 bricht, nicht jedoch der Gegenkörper 110. Somit bildet die Sollbruchstelle 121 an dem Betriebsanschlag 120 eine Art Überlastschutz für den Gegenkörper 110. Der Betriebsanschlag 120 dient darüber hinaus als Energieaufnahmeelement. Bei durch den Gegenkörper 110 auf den Betriebsanschlag 120 wirkender Überlast weicht der Betriebsanschlag 120 dem Gegenkörper 110 zur Absorption von Bewegungsenergie der Schutzhaube 51 und eben zum Bauteilschutz des Gegenkörpers 110 aus. Dies erfolgt im bevorzugten Ausführungsbeispiel durch Bruch des Betriebsanschlages 120 an der Sollbruchstelle 121 der Anschlagswand 124. Der Gegenkörper 110 bewegt sich durch den Betriebsanschlag 120 hindurch. Daher weist der Gegenkörper 110 eine höhere Bauteilfestigkeit auf als der Betriebsanschlag 120.

Ist der Betriebsanschlag 120 dem Gegenkörper 110 ausgewichen, weist die Schutzhaube 51 voraussichtlich eine restliche Bewegungsenergie auf. Folglich wird sich die Schutzhaube 51 weiter in Bewegungsrichtung 52 des Werkzeuges 5 drehen. Um nun die Drehbewegung der Schutzhaube 51 in eine Endstellung 25 zu begrenzen, umfasst das Arbeitsgerät 1 einen Endanschlag 101. Der Endanschlag 101 ist feststehend zum Gehäuse 2 ausgebildet.

Wie in Fig. 7 gezeigt, umfasst die Schutzhaube 51 einen weiteren Gegenkörper 102. Der weitere Gegenkörper 102 ist korrespondierend mit dem Endanschlag 101 ausgebildet. Der weitere Gegenkörper 102 ist bevorzugt integral an der Schutzhaube 51 ausgebildet. Der weitere Gegenkörper 102 ist bevorzugt an einer der beiden Außenseiten 115, 116 der Schutzhaube 51 ausgebildet. Bevorzugt ist der weitere Gegenkörper 102 an der zweiten Außenseite 116 der Schutzhaube 51 ausgebildet. Die zweite Außenseite 116 ist die dem Ausleger 30 zugewandte Außenseite der Schutzhaube 51.

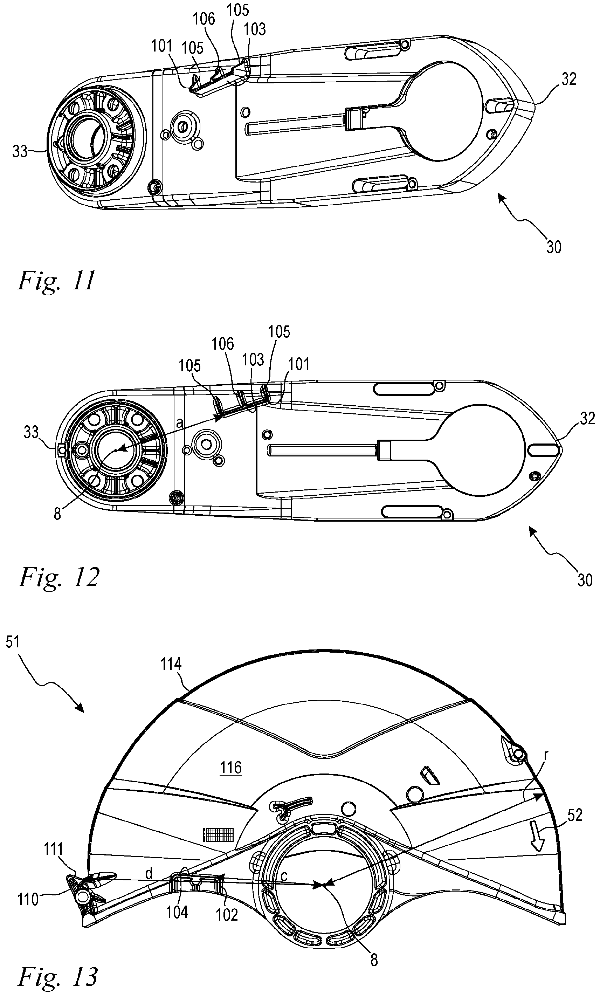

Wie in den Figuren 11 und 12 gezeigt, ist der Endanschlag 101 an dem Ausleger 30 ausgebildet. Der Endanschlag 101 ist bevorzugt integral an dem Ausleger 30 ausgebildet. Demnach sind der Endanschlag 101 und der Ausleger 30 vorzugsweise einteilig ausgebildet. Der Ausleger 30 ist vorzugsweise ein Gussbauteil. Der Ausleger 30 besteht vorzugweise aus einer Metalllegierung. Wie oben bereits ausgeführt, sind somit der Betriebsanschlag 120, der Endanschlag 101, der Gegenkörper 110 und/oder der weitere Gegenkörper 102 aus einer Metalllegierung gebildet.

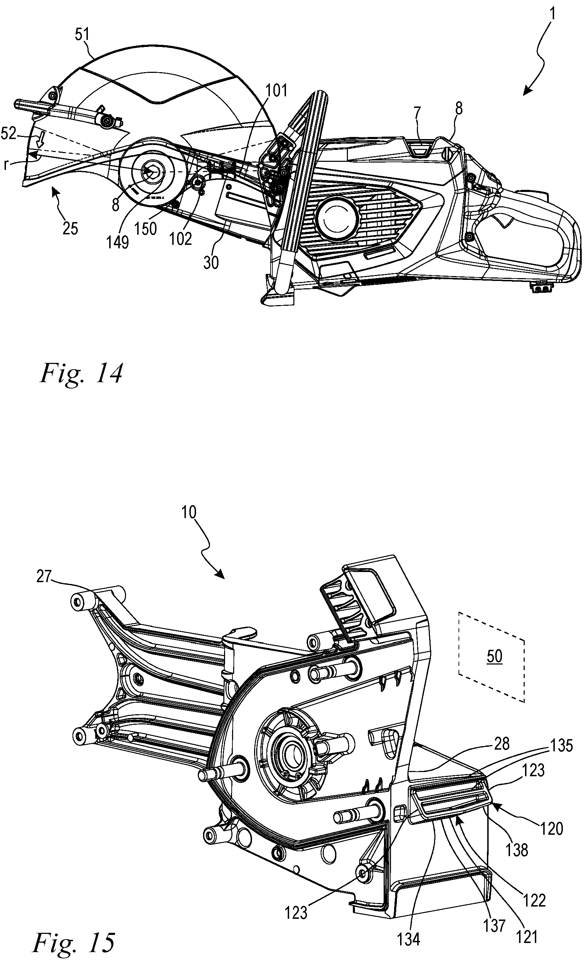

Wie in den Figuren 11 bis 13 gezeigt, umfasst der Endanschlag 101 eine dritte Anschlagsfläche 103. Der weitere Gegenkörper 102 umfasst eine vierte Anschlagsfläche 104. Dreht sich die Schutzhaube 51 in Drehrichtung 52 soweit, dass der weitere Gegenkörper 102 der Schutzhaube 51 an dem Endanschlag 101 des Auslegers 30 zur Anlage kommt, berühren sich diese gemeinsam in einer weiteren Kontaktfläche 150 (Fig. 14). Die weitere Kontaktfläche 150 ist aus dem Kontaktbereich der dritten Anschlagsfläche 103 des Endanschlages 101 und in der vierten Anschlagsfläche 104 des weiteren Gegenkörpers 102 gebildet. Die dritte Anschlagsfläche 103 des Endanschlages 101 und die vierte Anschlagsfläche 104 des weiteren Gegenkörpers 102 sind im Wesentlichen parallel zueinander ausgerichtet.

Wie in Fig. 13 gezeigt, umfasst die Schutzhaube 51 bezogen auf die Drehachse 8 einen Radius r. Eine derartige Schutzhaube 51 weist keinen ideal kreisrunden Haubenumfang auf. Daher soll der Haubenumfang als eine bezogen auf die Drehachse 8 radial äußerste Kontur verstanden werden, die durch einen Drehkörper vorgegeben wird, der wiederum aus einem Grundkörper der Schutzhaube, bestehend aus beiden Außenseiten 115, 116 und der Umfangsseite 114 der Schutzhaube, gebildet ist. Griffe der Schutzhaube sowie etwaige Anschläge beziehungsweise Gegenkörper sind nicht Teil des Grundkörpers der Schutzhaube 51. Der Gegenkörper 110 sowie der weitere Gegenkörper 102 sind beabstandet zueinander angeordnet. Der Gegenkörper 110 der Schutzhaube 51, insbesondere die erste Anschlagsfläche 111 des Gegenkörpers 110 der Schutzhaube 51, weist einen Abstand d zur Drehachse 8 auf. Der weitere Gegenkörper 102, insbesondere die vierte Anschlagsfläche 104 des weiteren Gegenkörpers 102, weist einen Abstand c zur Drehachse 8 auf. Der Abstand c zwischen der Drehachse 8 und dem weiteren Gegenkörper 102 ist geringer als der Abstand d zwischen dem Gegenkörper 110 und der Drehachse 8. Der Abstand c zwischen der Drehachse 8 und dem weiteren Gegenkörper 102 entspricht höchstens 50% des Abstandes d zwischen der Drehachse 8 und dem Gegenkörper 110.

Wie in Fig. 12 gezeigt, weist der Endanschlag 101, insbesondere die dritte Anschlagsfläche 103 des Endanschlages 101 einen Abstand a zur Drehachse 8 auf. Der Abstand a zwischen dem Endanschlag 101 und der Drehachse 8 beträgt höchstens 60%, insbesondere höchstens 50%, ganz insbesondere höchstens 40% des Radius r der Schutzhaube 51.

In Fig. 14 ist das Arbeitsgerät 1 mit einer strichliert angedeuteten Schutzhaube 51 gezeigt. Die Schutzhaube 51 befindet sich in einer Endstellung 25. In der Endstellung 25 der Schutzhaube 51 kontaktieren sich der weitere Gegenkörper 102 und der Endanschlag 101 des Auslegers 30 in der weiteren Kontaktfläche 150. Die Kontaktfläche 150 erstreckt sich radial zur Drehachse 8 über eine Mindestlänge, die mindestens 10% des Radius r der Schutzhaube 51 entspricht. Die weitere Kontaktfläche 150 spannt wiederum eine weitere Kontaktebene 149 auf, welche im Wesentlichen einer Radialebene der Drehachse 8 entspricht. Somit liegt die Drehachse 8 vollständig in der Kontaktebene 149.

Wie in den Figuren 11 und 12 gezeigt, weist der Endanschlag 101 an seinen bezogen auf die Drehachse 8 radialen Enden jeweils eine Rippe 105 auf, die den Endanschlag 101 gegen den Grundkörper des Auslegers 30 abstützen. Zur Erhöhung der Festigkeit weist der Endanschlag 101 zwischen den beiden Rippen 105 eine weitere Stützrippe 106 auf, die zur Abstützung des Endanschlages 106 an dem Ausleger 30 dient.

In einer alternativen Ausführung des Arbeitsgerätes 1 kann es auch vorgesehen sein, dass der Betriebsanschlag 120 ein vorgespanntes Anschlagselement umfasst, welches an der Motortrageinheit 10 oder am Gehäuse 2 angeordnet ist. Das vorgespannte Anschlagselement ist schwenkbar ausgebildet und derart ausgebildet, dass dieses bei Auftreffen des Gegenkörpers 110 dem Gegenkörper 110 ausweicht. Hierfür muss der Gegenkörper 110 die Vorspannung, vorzugsweise durch ein Federelement bewirkt, des Anschlagselementes überwinden. Dabei absorbiert das Anschlagselement Bewegungsenergie der Schutzhaube 51. Das Anschlagselement würde also nicht wegbrechen, sondern unter Überwindung der Vorspannung zur Seite schwenken. Anschließend könnte die Schutzhaube 51 wieder zurück in eine Betriebsstellung geschwenkt werden, ohne dass dieses gebrochen oder anderweitig beschädigt wäre.

In einer weiteren alternativen Ausführung des Arbeitsgerätes 1 könnte auch vorgesehen sein, dass der Betriebsanschlag 120 ein besonders duktiles Element umfassen würde, welches sich beim Aufprall des Gegenkörpers 110 plastisch verformen würde, nicht jedoch brechen würde.

Darüber hinaus könnte der Betriebsanschlag 120 auch um eine Bremse ergänzt werden, die die Schutzhaube 51 abbremsen würde. Auch andere Ausführungen des Betriebsanschlages 120 sind denkbar, die eine Absorption der Bewegungsenergie der Schutzhaube 51 bewirken.

In einer weiteren, alternativen Ausgestaltung des Arbeitsgerätes 1 ist es vorgesehen, analog der gezeigten Ausführung auch Anschläge und Gegenkörper vorzusehen, die einen Betrieb des Arbeitsgerätes 1 mit zwei Drehrichtungen des Werkzeuges 5 ermöglichen.

Wie in den Figuren 7 und 9 gezeigt, weist der weitere Gegenkörper 102 der Schutzhaube 51 ein freiliegendes Ende 107 auf, das von der zweiten Außenseite 116 der Schutzhaube 51 abgewandt ist. Das freiliegende Ende 107 ist dem Ausleger 30 zugewandt. Das freiliegende Ende 107 ist durch eine Kante 108 des weiteren Gegenkörpers 102 gebildet. Die Kante 108 des freiliegenden Endes 107 des weiteren Gegenkörpers 102 ist in etwa parallel zur zweiten Außenseite 116 der Schutzhaube 51 ausgerichtet. In anderen Worten liegt die Kante 108 des freiliegenden Endes 107 des weiteren Gegenkörpers 102 vollständig in einer Ebene, die parallel zur Werkzeugebene 50 ausgerichtet ist. In einer alternativen, bevorzugten, Ausführung der Schutzhaube 51 ist das freiliegende Ende 107 des weiteren Gegenkörpers 102 mit einer Kante 108' versehen, welche der Außenkontur des Auslegers 30 angepasst ist. Somit kann ein möglichst großer Überlapp, gemessen in Richtung der Drehachse 8, zwischen dem Endanschlag 101 sowie dem weiteren Gegenkörper 102 erzielt werden, ohne dass der weitere Gegenkörper 102 an dem Grundkörper des Auslegers 30 anschlägt. Eine solche an den Ausleger 30 angepasste Kante 108' des weiteren Gegenkörpers 102 ist in Fig. 7 gestrichelt dargestellt. Die angepasste Kante 108' des weiteren Gegenkörpers 102 verläuft in der gestrichelten, schematisch angedeuteten Ausführung schräg zur Werkzeugebene 50. Auch andere Konturen des freien Endes 107 des Gegenkörpers 102 sind denkbar, die der Kontur des Auslegers 30 angepasst sind.

In den Figuren 15 bis 17 ist eine weitere Ausführung der Motortrageinheit 10 gezeigt. Gleiche Bezugszeichen kennzeichnen gleiche Bauteile der Motortrageinheit 10. Diese Motortrageinheit 10 unterscheidet sich gegenüber der Motortrageinheit nach Fig. 8 im Wesentlichen in der Ausgestaltung des Betriebsanschlages 120. Der Betriebsanschlag 120 weist in dieser Ausführung zwei äußere Rippen 123 auf, deren Haupterstreckungsrichtung in einer zur Werkzeugebene 50 parallel ausgerichteten Ebene verläuft. Nachfolgend sind Rippen 123 mit einer solchen Haupterstreckungsrichtung als Längsrippen bezeichnet.

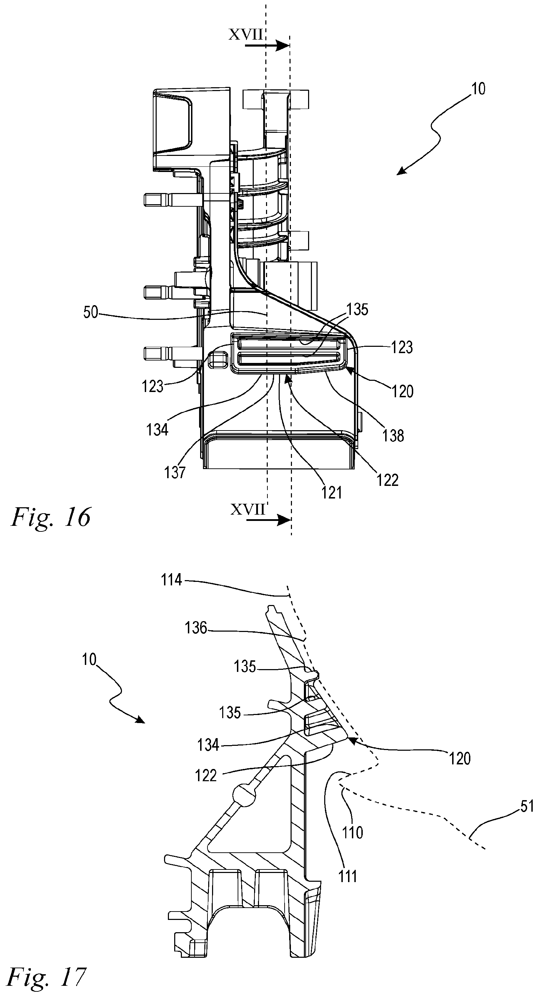

Wie in den Figuren 15 und 16 gezeigt, sind die zwei Längsrippen 123 als äußere Rippen ausgebildet und begrenzen den Betriebsanschlag 120 in Richtung der Drehachse 8 des Werkzeuges 5. Ferner umfasst der Betriebsanschlag 120 eine erste Querrippe 134 sowie mindestens eine weitere Querrippe 135. In der vorliegenden Ausführung sind zwei weitere Querrippen 135 am Betriebsanschlag 120 vorgesehen. Auch eine andere Anzahl an weiteren Querrippen kann zweckmäßig sein. Die mehreren Querrippen 134, 135 weisen eine Haupterstreckungsrichtung auf, die der Richtung der Drehachse 8 des Werkzeuges 5 entspricht. An der ersten Querrippe 134 ist die zweite Anschlagsfläche 122 des Betriebsanschlages 120 ausgebildet. Da die zwei Längsrippen 123 lediglich an den äußeren Enden der Querrippen 134, 135 angeordnet sind, ist die Festigkeit des Betriebsanschlages 120 im mittleren Bereich der ersten Querrippe 134 reduziert. Im mittleren Bereich 121 ist somit die Struktursteifigkeit reduziert. Trifft beispielsweise beim Bersten des Werkzeuges 5 der Gegenkörper 110 mit seiner ersten Anschlagsfläche 111 auf die zweite Anschlagsfläche 122 des Betriebsanschlages 120, kann diese aufgrund der reduzierten Festigkeit mangels zusätzlicher Längsrippen verformen. Dabei wird die kinetische Energie der Schutzhaube 51 zumindest teilweise, insbesondere vollständig abgebaut. Bei lediglich teilweisem Energieabbau kontaktiert der Gegenkörper 110 der Schutzhaube 51 die mindestens eine weitere Querrippe 135. Sollte auch die zweite Querrippe 135 durch den Gegenkörper 110 verformen, würde dieser auf die dritte Querrippe 135 prallen. Das Arbeitsgerät 1 ist derart ausgelegt, dass wenn sämtliche Querrippen 134, 135 des Betriebsanschlages 120 aufgrund besonders hoher kinetischer Energie der Schutzhaube 51 verformen, die Schutzhaube 51 zumindest ihre Endstellung über den Kontakt zwischen dem weiteren Gegenkörper 102 und dem Endanschlag 101 erreicht. Durch das Verformen der Querrippen 134, 135 wird die kinetische Energie der Schutzhaube 51 schrittweise abgebaut, wodurch die auf die Schutzhaube 51 wirkenden maximalen Kräfte reduziert werden.

Fig. 17 zeigt in einer ausschnittsweisen Schnittdarstellung gemäß der Schnittlinie XVII nach Fig. 16 die Motortrageinheit 10. In gestrichelter Linie ist die Schutzhaube 51 mit ihrem Gegenkörper 110 schematisch angedeutet. Eine der Querrippen 134, 135, vorliegend die dritte Querrippe 135, ist derart ausgebildet, dass diese beim Bersten des Werkzeuges 5 die Umfangsseite 114 der Schutzhaube 51 kontaktiert, noch bevor der Gegenkörper 110 der Schutzhaube 51 auf den Betriebsanschlag 120 der Motortrageinheit 10 trifft. Beim Bersten des Werkzeuges 5 kann sich die Schutzhaube 51 elastisch verformen und an der Schnittstelle der Schutzhaube 51 zum Ausleger 30 auslenken. Infolge kontaktiert die Umfangsseite 114 die entsprechende Querrippe 135. Dies hat zur Folge, dass durch den Kontakt der Umfangsseite 114 der Schutzhaube 51 und der entsprechenden Querrippe 135 des Betriebsanschlages 120 Energie abgebaut wird, noch bevor der Gegenkörper 110 der Schutzhaube 51 auf den Betriebsanschlag 120 der Motortrageinheit 10 trifft. Somit wird die Aufprallenergie der beiden Anschläge reduziert. Die entsprechende Querrippe 135, die zum Kontakt mit der Umfangsseite 114 der Schutzhaube 51 vorgesehen ist, weist im Betriebszustand, außerhalb eines Berstens des Werkzeuges 5, einen geringeren Abstand zur Umfangsseite 114 der Schutzhaube 51 auf, als die anderen Querrippen 134, 135. Es kann alternativ auch vorgesehen sein, dass mehrere Querrippen 134, 135 dazu ausgebildet sind, im Falle des Berstens die Schutzhaube 51 umfangsseitig zu kontaktieren. An der Schutzhaube 51 ist insbesondere ein Kamm 136 ausgebildet, der als Vorsprung an der Umfangsseite 114 der Schutzhaube 51 vorgesehen ist. Somit kontaktieren sich in vorliegender Ausführung der Kamm 136 der Schutzhaube 51 und die entsprechende Querrippe 135 des Betriebsanschlages 120.

In den Figuren 15 und 16 ist gezeigt, dass sich die zweite Anschlagsfläche 122 des Betriebsanschlags 120 in eine Hauptfläche 137 und eine Nebenfläche 138 unterteilt. Die Hauptfläche 137 ist senkrecht zur Werkzeugebene 50 des Arbeitsgerätes 1 ausgerichtet. Dreht sich die Schutzhaube 51 in der Werkzeugebene 50, so kontaktiert die erste Anschlagsfläche 111 des Gegenkörpers 110 der Schutzhaube 51 den Betriebsanschlag 120 in seiner Hauptfläche 137.

Die Nebenfläche 138 der zweiten Anschlagsfläche 122 grenzt unmittelbar an der Hauptfläche 137 der zweiten Anschlagsfläche 122 an. Die Hauptfläche 137 ist derart ausgerichtet, dass diese von der Werkzeugebene 50 geschnitten wird. Die Nebenfläche 138 der zweiten Anschlagsfläche 122 liegt außerhalb der Werkzeugebene 50. Die Nebenfläche 138 und die Hauptfläche 137 sind jedoch nicht parallel zueinander ausgerichtet. Die Nebenfläche 138 weist eine Neigung gegenüber der Hauptfläche 137, auf. Die Neigung beträgt in der vorliegenden Ausführung in etwa 5°. Berstet das Werkzeug 5, so kann sich die Schutzhaube 51, wie oben bereits beschrieben, verformen und an der Schnittstelle zum Ausleger 30 auslenken. Üblicherweise verformt sich die Schutzhaube 51 derart, dass diese sich an ihrer Unterseite in Richtung zur ersten Längsseite 115 hin und an ihrer Oberseite in Richtung zur zweiten Längsseite 116 hin verformt. Infolge schwenkt sich die Drehebene der Schutzhaube 51 gegenüber der ursprünglichen Werkzeugebene 50, wodurch sich die erste Anschlagsfläche 111 des Gegenkörpers 110 und die Hauptfläche 137 der zweiten Anschlagsfläche 122 des Betriebsanschlages 120 nicht mehr flächig kontaktieren. Die erste Anschlagsfläche 111 des Gegenkörpers 110 trifft in einem solch verformten Zustand auf die Nebenfläche 138 der zweiten Anschlagsfläche 122 des Betriebsanschlages 120. Durch die geneigte Ausrichtung der Nebenfläche 138 kontaktieren sich die Nebenfläche 138 und die erste Anschlagsfläche 111 des Gegenkörpers 110 weitestgehend flächig. Eine flächige Kraftübertragung wird somit sichergestellt.

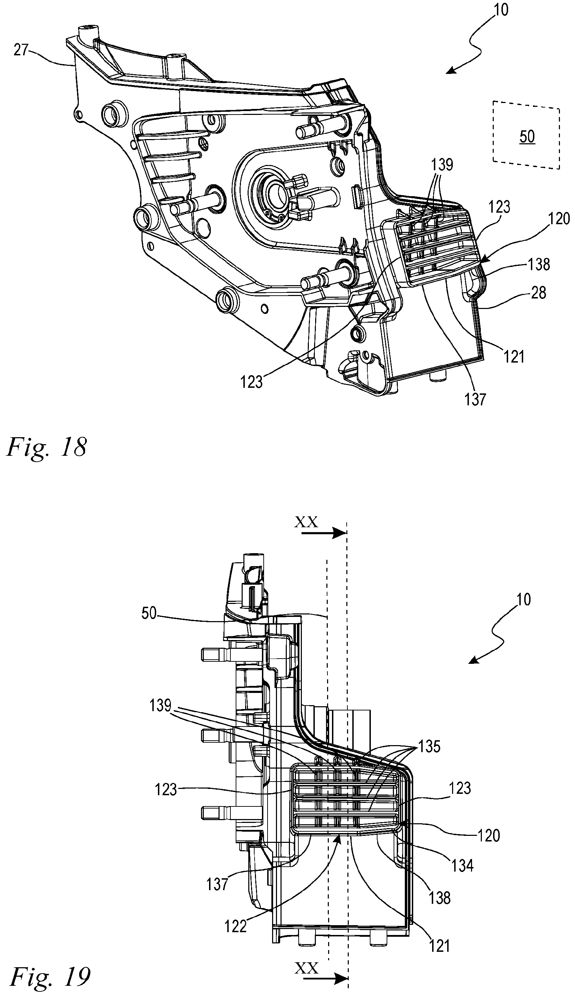

In den Figuren 18 bis 20 ist eine zusätzliche Ausführung der Motortrageinheit 10 gezeigt. Gleiche Bezugszeichen kennzeichnen gleiche Bauteile der Motortrageinheit 10. Der Betriebsanschlag 120 umfasst neben der ersten Querrippe 134 mehrere Querrippen 135. Die Anzahl der mehreren Querrippen 135 beträgt in diesem Ausführungsbeispiel vier. Somit kann die kinetische Energie der Schutzhaube 51 beim Verformen der ersten Querrippe 134 sowie der mehreren Querrippen 135 abgebaut werden.

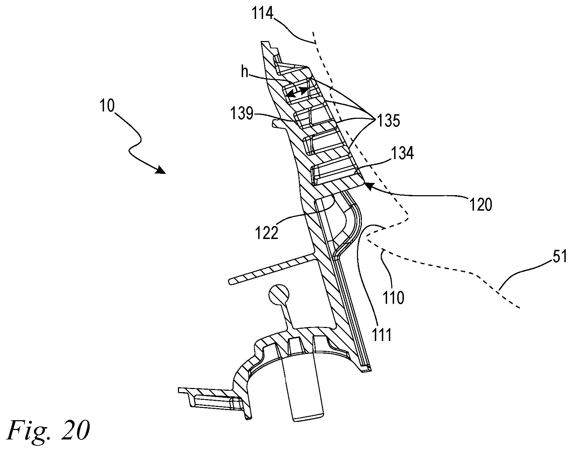

Ein wesentlicher Unterschied gegenüber der Ausführung nach den Figuren 15 bis 17 besteht in der Ausgestaltung der Längsrippen 123, 139. Der Betriebsanschlag 120 umfasst äußere Längsrippen 123, die die Querrippen 134, 135 an ihren Enden einfassen. Somit bilden die beiden äußeren Längsrippen 123 einen Teilrahmen für den Betriebsanschlag 120. Ferner umfasst der Betriebsanschlag 120 innere Längsrippen 139. In der vorliegenden Ausführung umfasst der Betriebsanschlag 120 mehrere innere Längsrippen 139, insbesondere drei innere Längsrippen 139. Auch eine andere Anzahl an inneren Längsrippen 139 kann zweckmäßig sein. Die inneren Längsrippen 139 erstrecken sich, wie insbesondere auch die äußeren Längsrippen 133, von der ersten Querrippe 134 über alle Querrippen 135 hinweg. Die inneren Längsrippen 139 weisen eine Höhe h auf, wie in Fig. 20 gezeigt. Die Höhe h ist orthogonal zur Grundfläche des Betriebsanschlages 120, auf der die inneren Längsrippen 139 angeordnet sind, gemessen. Die Höhe h einer jeden inneren Längsrippe 139 nimmt in Ihrer Längsrichtung ausgehend von der ersten Querrippe 134 bis hin zur letzten Querrippe 135 insbesondere linear zu. Durch die Zunahme der Höhe h der inneren Längsrippen 139 in Ihrer Längsrichtung reduziert sich auch der Abstand zwischen der inneren Längsrippe 139 und der Schutzhaube 51. Die inneren Längsrippen 139 des Betriebsanschlages 120 sind derart ausgebildet und angeordnet, dass der Gegenkörper 110 beim Verformen der ersten Querrippe 134 anschließend die inneren Längsrippen 139 kontaktiert. Je weiter sich der Gegenkörper 110 in den Betriebsanschlag 120 eindreht, desto größer wird der Widerstand durch die inneren Längsrippen 139 gegen die Drehbewegung der Schutzhaube 51. Die inneren Längsrippen 139 bewirken gegenüber dem Gegenkörper 110 eine Art Keileffekt, der dem Weiterdrehen der Schutzhaube 51 entgegenwirkt. Somit wird die kinetische Energie der Schutzhaube 51 über den Kontakt des Gegenkörpers 110 zum einen mit den Querrippen 134, 135 des Betriebsanschlages 120 und zum anderen mit den inneren Längsrippen 139 des Betriebsanschlages 120 abgebaut.

Eine Unterteilung der zweiten Anschlagsfläche 122 des Betriebsanschlages 120 in eine Hauptfläche 137 und eine Nebenfläche 138 ist analog der Ausführungen der Motortrageinheit nach Fig. 8 sowie nach den Figuren 15 bis 17 vorgesehen.

## Patentansprüche

1. Handgeführtes Arbeitsgerät,
umfassend,
ein Gehäuse (2),
einen im Gehäuse (2) angeordneten Antriebsmotor (3) zum Antrieb eines um eine Drehachse (8) rotierenden Werkzeuges (5),
eine Schutzhaube (51), wobei die Schutzhaube (51) das Werkzeug (5) mindestens teilweise überdeckt,
einen gegenüber dem Gehäuse (2) feststehenden Betriebsanschlag (120) und einen mit dem Betriebsanschlag (120) korrespondierenden, an der Schutzhaube (51) angeordneten Gegenkörper (110),
**dadurch gekennzeichnet, dass** der Betriebsanschlag (120) als ein Energieaufnahmeelement ausgebildet ist, das bei durch den Gegenkörper (110) auf den Betriebsanschlag (120) wirkender Überlast zur Absorption von Bewegungsenergie der Schutzhaube (51) und zum Bauteilschutz des Gegenkörpers (110) dem Gegenkörper (110) ausweicht, und
dass das Arbeitsgerät (1) einen Endanschlag (101) zur Begrenzung der Drehbewegung der Schutzhaube (51) in eine Endstellung (25) umfasst.

2. Arbeitsgerät nach Anspruch 1,
**dadurch gekennzeichnet, dass** an der Schutzhaube (51) ein mit dem Endanschlag (101) korrespondierender, weiterer Gegenkörper (102) vorgesehen ist, wobei der weitere Gegenkörper (102) insbesondere integral an der Schutzhaube (51) ausgebildet ist.

3. Arbeitsgerät nach Anspruch 1 oder 2,
**dadurch gekennzeichnet, dass** das Arbeitsgerät (1) einen Ausleger (30) mit einem proximalen Ende (32) und einem distalen Ende (33) aufweist, wobei der Ausleger (30) mit seinem proximalen Ende (32) am Gehäuse (2) festgelegt ist und wobei an dem distalen Ende (33) das Werkzeug (5) anordenbar ist, wobei der Endanschlag (101) an dem Ausleger (30) insbesondere integral ausgebildet ist.

4. Arbeitsgerät nach einem der Ansprüche 1 bis 3,
**dadurch gekennzeichnet, dass** die Schutzhaube (51) eine erste Außenseite (115), eine zweite Außenseite (116) und eine Umfangsseite (114) umfasst, wobei die erste Außenseite (115) und die zweite Außenseite (116) über die Umfangsseite (114) miteinander verbunden sind, wobei der mit dem Betriebsanschlag (120) korrespondierende Gegenkörper (110) an der Umfangsseite (114) angeordnet ist.

5. Arbeitsgerät nach Anspruch 4,
**dadurch gekennzeichnet, dass** der mit dem Endanschlag (101) korrespondierende weitere Gegenkörper (102) an der ersten Außenseite (115) oder an der zweiten Außenseite (116) der Schutzhaube (51) festgelegt ist.

6. Arbeitsgerät nach einem der Ansprüche 4 oder 5,
**dadurch gekennzeichnet, dass** die Schutzhaube (51) bezogen auf die Drehachse (8) einen Radius (r) aufweist, wobei der Abstand (a) des Endanschlages (101) zur Drehachse (8) höchstens 60%, insbesondere höchstens 50%, ganz insbesondere höchstens 40% des Radius (r) der Schutzhaube (51) beträgt.

7. Arbeitsgerät nach Anspruch 6,
**dadurch gekennzeichnet, dass** der Endanschlag (101) und der weitere Gegenkörper (102) derart ausgebildet sind, dass diese bei gegenseitigem Kontakt eine Kontaktfläche (150) aufweisen, die sich radial zur Drehachse (8) über mindestens 10% des Radius (r) der Schutzhaube (51) erstreckt.

8. Arbeitsgerät nach einem der Ansprüche 4 bis 7,
**dadurch gekennzeichnet, dass** das Arbeitsgerät (1) eine Motortrageinheit (10) aufweist, an der der Antriebsmotor (3) und das Gehäuse (2) des Arbeitsgerätes (1) befestigt sind, wobei der Betriebsanschlag (120) an der Motortrageinheit (10) angeordnet ist.

9. Arbeitsgerät nach einem der Ansprüche 1 bis 8,
**dadurch gekennzeichnet, dass** der Betriebsanschlag (120), der Endanschlag (101), der Gegenkörper (110) und/oder der weitere Gegenkörper (102) aus einer Metalllegierung gebildet sind.

10. Arbeitsgerät nach einem der Ansprüche 1 bis 9,
**dadurch gekennzeichnet, dass** das Arbeitsgerät (1) eine an dem Betriebsanschlag (120) ausgebildete erste Anschlagsfläche (122) und eine an dem Gegenkörper (110) ausgebildete zweite Anschlagsfläche (111) aufweist, die sich bei Kontakt von Betriebsanschlag (120) und Gegenkörper (110) in einer gemeinsamen Kontaktfläche (130) berühren, und dass die Kontaktfläche (130) eine Kontaktebene (140) aufspannt, und dass die Kontaktebene (140) das Werkzeug (5) an einem Werkzeugumfang (141) des Werkzeuges (5) in einer Kontaktlinie schneidet und mit einer Tangentialebene (142) des Werkzeuges (5), die das Werkzeug (5) an der Kontaktlinie berührt, einen Winkel (β) einschließt, wobei der Winkel (β) in Drehrichtung (52) des Werkzeuges (5) geöffnet ist, wobei der Winkel (β) kleiner gleich 90°, insbesondere kleiner als 80° ist, und wobei der Winkel (β) insbesondere größer als 55°, insbesondere größer als 65°, insbesondere größer als 70° ist.
